# EUROPEAN PATENT APPLICATION

(11) **EP 2 130 568 A1**
(43) Date of publication of application: **09.12.2009**
(21) Application number: 08721053.0
(22) Date of filing: 29.02.2008
(51) Int. Cl.: A63B 24/00, A63B 69/00, A63B 71/06, A63F 13/00

(54) **GAME DEVICE, GAME PROCESSING METHOD, INFORMATION STORAGE MEDIUM, AND PROGRAM**

(30) Priority: 27.03.2007 JP 2007081465
(71) Applicant: Konami Digital Entertainment Co., Ltd., Tokyo 107-8324 (JP)
(72) Inventor: YAMAOKA, Akira, Tokyo 107-8324 (JP); MURAKAMI, Takahide, Tokyo 107-8324 (JP)
(74) Representative: Epping - Hermann - Fischer
(86) International application number: PCT/JP2008/053633
(87) International publication number: WO 2008/117628

(57) **Abstract**

In a game device (200), a storage unit (201) stores information indicating a position, a posture and an orientation of a character object to serve as a model, breathing instruction information specifying a time period in which a player should exhale, and a position of a detecting unit (203) detecting a sound production of the player. A deriving unit (204) derives a time period in which the player is taking a breath from a sound production detected by the detecting unit (203). A scoring unit (205) compares the breathing instruction information stored in the storage unit (201) with a time period derived by the deriving unit (204), and gives scores the breathing of the player based on a degree of agreement therebetween. An output unit (206) outputs a result of scoring by the scoring unit (205). A display unit (202) displays an image containing the scoring result and the character object.

## Description

### Technical Field

The present invention relates to a game device, a game processing method, an information recording medium and a program that are suitable for guiding a player to take desired motion and breathing.

### Background Art

Games involving game plays that involve player's motions by their entire bodies have been popular. For example, Patent Literature 1 discloses a device that provides a display instruction of a position and a timing on and at which a player should step, so that the player can enjoy the feeling of dancing when he/she can accord with the instruction. According to this literature, the game device detects stepping motions of a player, and gives scores to the motions of the player based on a difference from the positions and timings of the step instructions. When the player is moving his/her entire body in accordance with the instruction, he/she is being able to dance to the rhythms and the music. Thus, the conventional game devices can guide a player to a desired motion.
Patent Literature 1: Japanese Patent No. 3003851

### Disclosure of Invention

### Problem to be solved by the Invention

On the other hand, in so-called exercises of the real world such as yoga, stretches or gymnastics, the players have to follow an instruction to perform a prescribed motion, besides pursuing precise or suggested timings in their breathing. That is, a game designed to provide a player experience as such, needs to guide a player to a desired motion, as well as guiding on at which timing and how the player should take a breath. In particular, in a game that tutors yoga, gymnastics or other exercises through which a player can train his/her entire body and promote his/her health, it is needed to guide the player to an accurate timing of breathing and a correct motion including the manner of breathing, in order that a better effect is achieved and instructions are more graspable even while the player is moving his/her body. According to the conventional game devices, however, it is difficult for a player to judge whether his/her game play is with correct breathing. Moreover, it is difficult for the player to judge how appropriate the player's breathing is during the game play.

The present invention is made in order to overcome the above problem, and one object of the present invention is to provide a game device, a game processing method, an information recording medium and a program that are suitable for deriving the strength in which a user performs depressing operation.

### Means for Solving the Problem

In order to achieve the foregoing object, the present invention will be disclosed in accordance with the principle of the present invention.

A game device according to a first aspect of the present invention has a storage unit, a display unit, a detecting unit, a deriving unit, a scoring unit and an output unit.
The storage unit stores a position, a posture and an orientation of a character object in a virtual space in association with an elapsed time, and stores a time period in which a player should exhale a breath.
The display unit displays the character object based on the position, the posture and the orientation of the character object stored in the storage unit in association with a current elapsed time, and displays information indicating whether or not a current time is within the time period stored in the storage unit, in which the player should exhale.
The detecting unit detects sound production by the player.
The deriving unit derives, based on the detected sound production, a time period in which the player is exhaling.
The scoring unit gives scores to breathing of the player based on a degree of agreement between the stored time period in which the player should exhale and the derived time period in which the player is exhaling.
The output unit outputs a result of scoring by the scoring unit.
As a result, the game device displays an image of the character object to serve as a model in association with an elapsed time to navigate a motion, and gives scores to breathing of the player in accordance with a breathing timing of the player. The game device can guide the player to a desired motion, and can guide the player to a breath exhalation at a desired timing. Moreover, the game device can give the player some advices, such as the degree of appropriateness of timing at which the breathing of the player is taken, and an appropriate timing for the player to take a breath.

The storage unit may further store a position of a detecting object representing the detecting unit,
the display unit may display the detecting object together with the character object, and
the scoring unit may execute scoring when a distance between a mouth of the character object and the detecting object is less than a predetermined threshold.
As a result, when the distance between the mouth of the character object to serve as a model and a microphone for detecting a breath is less than the predetermined threshold, the game device gives scores a breathing of the player. Accordingly, a process load for scoring the breathing of the player can be reduced.

The game device may further comprise:
an input receiving unit which receives an input to move a position of the detecting object from the player; and
an updating unit which updates a position of the detecting object stored in the storage unit based on the received input.
As a result, even if a position of the microphone for detecting a breath of the player is changed, the game device can derive a time period in which the player is exhaling. The player may change the position of the microphone arbitrarily.

The storage unit may further store a position of a view point and a viewing direction from and in which the character object is viewed in the virtual space,
the input receiving unit may further receive an input of instruction to move the position of the view point and the viewing direction,
the updating unit may update the position of the view point and the viewing direction stored in the storage unit based on the input of moving the position of the view point and the viewing direction, and
the display unit may generate and display an image in which the character object is viewed from the position of the view point in the viewing direction based on the position, the posture and the orientation of the character object stored in the storage unit (201) in association with a current elapsed time and the position of the view point and the viewing direction stored in the storage unit (201).
As a result, the game device can display an image in which the character object is viewed from a given position in the virtual space. This improves intelligibility of what motion the player should take.

The display unit may further generate and display an image of a view of the virtual space as seen from the character object.
As a result, the game device can display an image viewed from the character object in the virtual space. This further makes it easy for the player to figure out what motion the player should take.

The display unit may display the character object with a predetermined first color when a current time is within a time period in which the player should exhale, and display the character object with a predetermined second color other than the first color when a current time is not within that time period.
As a result, the game device can display more clearly a timing at which the player should inhale and a timing at which the player should exhale.

The storage unit may further store a strength of exhaling that the player should take in association with a time period in which the player should exhale a breath, and
the display unit may display the character object while changing a shading of the first color based on the stored strength of breathing.
As a result, in addition to a timing at which the player should inhale and a timing at which the player should exhale, the game device can clearly display a strength of inhaling and an strength of exhaling.

A game processing method according to another aspect of the present invention is executed by a game device having a storage unit, and comprises a display step, a detecting step, a deriving step, a scoring step and an output step.
The storage unit stores a position, a posture and an orientation of a character object in a virtual space in association with an elapsed time and stores a time period in which a player should exhale.
The display step displays the character object based on the position, the posture and the orientation of the character object stored in the storage unit in association with a current elapsed time, and displays information indicating whether or not a current time is within a time period stored in the storage unit, in which the player should exhale.
The detecting step detects a sound production by the player.
The deriving step derives a time period in which the player is exhaling, from the detected sound production.
The scoring step gives scores to breathing of the player based on a degree of agreement between the derived time period in which the player is taking a breath and the stored time period in which the player should exhale.
The output step outputs a result of scoring obtained through the scoring step.
As a result, the game device using this game processing method can display an image of the character object to serve as a model in accordance with an elapsed time to guide the player a motion, and can score the breathing of the player in accordance with a breathing timing of the player. The game device can guide the player to have a desired motion and can guide the player to exhale a breath at a desired timing. Moreover, the game device can give the player some advices, such as the degree of appropriateness of the timing at which the player exhales, and which timing the player should exhale a breath.

An information recording medium according to another aspect of the present invention stores a program that allows a computer to function as a storage unit, a display unit, a detecting unit, a deriving unit, a scoring unit, and an output unit.
The storage unit stores position, posture and orientation of a character object in a virtual space in association with an elapsed time, and stores a time period in which a player should exhale.
The display unit displays the character object based on the position, the posture and the orientation of the character object stored in the storage unit in association with a current elapsed time, and displays information indicating whether or not a current time is within a time period stored in the storage unit, in which the player should exhale.
The detecting unit detects a sound production by the player.
The deriving unit derives a time period in which the player is exhaling from a detected sound production.
The scoring unit gives scores to breathing of the player based on a degree of agreement between the derived time period in which the player is taking a breath and the stored time period in which the player should exhale.
The output unit outputs a result of scoring by the scoring unit.
As a result, a computer can function as a device which displays an image of the character object to serve as a model in association with an elapsed time to navigate a motion, and gives scores breathing of the player in accordance with a breathing timing of the player. The computer can guide the player to have a desired motion, and can guide the player to exhale at a desired timing. Moreover, the computer can give the player some advices, such as the degree of appropriateness of the timing at which breathing of the player is taken, and which timing the player should exhale.

A program according to another aspect of the present invention allows a computer to function as a storage unit, a display unit, a detecting unit, a deriving unit, a scoring unit, and an output unit.
The storage unit stores a position, a posture and an orientation of a character object in a virtual space in association with an elapsed time, and stores a time period in which a player should exhale.
The display unit displays the character object based on the position, the posture and the orientation of the character object stored in the storage unit in association with a current elapsed time, and displays information indicating whether or not a current time is within a time period stored in the storage unit, in which the player should exhale.
The detecting unit detects a sound production by the player.
The deriving unit derives a time period in which the player is exhaling from a detected sound production.
The scoring unit gives scores to breathing of the player based on a degree of agreement between the derived time period in which the player is taking a breath and the stored time period in which the player should exhale.
The output unit outputs a result of scoring by the scoring unit.
As a result, the program can allow a computer to function as a device that displays an image of the character object to serve as a model in association with an elapsed time to navigate a motion, and gives scores to breathing of the player in accordance with a breathing timing of the player. The computer can guide the player to a desired motion, and can guide the player so that the player exhales at a desired timing. Moreover, the computer can give the player some advices, such as the appropriateness of the timing of breathing, and which timing the player should exhale.

The program of the present invention can be recorded in a computer-readable recording medium, such as a compact disk, a flexible disk, a hard disk, a magneto-optical disk, a digital video disk, a magnetic tape, or a semiconductor memory.
The above-described program can be distributed and soled via a computer network, separately from a computer that executes the program. Moreover, the above-described information recording medium can be distributed and sold separately from a computer.

### Effect of the Invention

According to the present invention, it is possible to provide a game device, a game processing method, an information recording medium and a program that are suitable for guiding a player to take desired motion and breathing.

### Brief Description of Drawings

FIG. 1 is a diagram showing a schematic structure of a typical information processing device that realizes a game device of the present invention.
FIG. 2 is a schematic diagram for explaining a process executed by each unit of the game device.
FIG. 3 shows an exemplary configuration of a screen displayed on a monitor.
FIG. 4 is a flowchart for explaining an input read-in process.
FIG. 5 is a flowchart for explaining a Fourier conversion process.
FIG. 6 is a flowchart for explaining a derivation process.
FIG. 7 is a flowchart for explaining a process of outputting a result of derivation.
FIG. 8 is a flowchart for explaining a scoring process.
FIG. 9 shows an exemplary configuration of a screen displayed on the monitor.
FIG. 10A shows an exemplary configuration of a screen displayed on a monitor according to a second embodiment.
FIG. 10B shows an exemplary configuration of a screen displayed on the monitor according to the second embodiment.
FIG. 11 is a flowchart for explaining a scoring process according to the second embodiment.
FIG. 12 is a schematic diagram for explaining a process executed by each unit of a game device according to a third embodiment.
FIG. 13 shows an exemplary configuration of a screen displayed on a monitor according to the third embodiment.
FIG. 14 is a diagram for explaining a process in which a scoring unit gives scores according to a fourth embodiment.
FIG. 15 is a diagram for explaining a process in which a scoring unit gives scores according to a fifth embodiment.

### Description of Reference Numerals

- 100: Information processing device
- 101: CPU
- 102: ROM
- 103: RAM
- 104: Interface
- 105: Controller
- 106: External memory
- 107: Image processor
- 108: DVD-ROM drive
- 109: NIC
- 110: Sound processor
- 111: Microphone
- 200: Game device
- 201: Storage unit
- 202: Display unit
- 203: Detecting unit
- 204: Deriving unit
- 205: Scoring unit
- 206: Output unit
- 301: Model object
- 302: background object
- 303: Game device object
- 1010: Detecting object
- 1201: Input receiving unit
- 1202: Updating unit

### Best Mode for Carrying Out the Invention

Embodiments of the present invention will be described below. The embodiments below of the present invention are described for cases where the present invention is realized using an information processing device for games. However, the embodiments described below are provided to give an explanation, not to limit the scope of the present invention. Therefore, those skilled in the art can adopt embodiments in which some or all of the elements herein have been replaced with respective equivalents, and such embodiments are also to be included within the scope of the present invention.

### [First Embodiment]

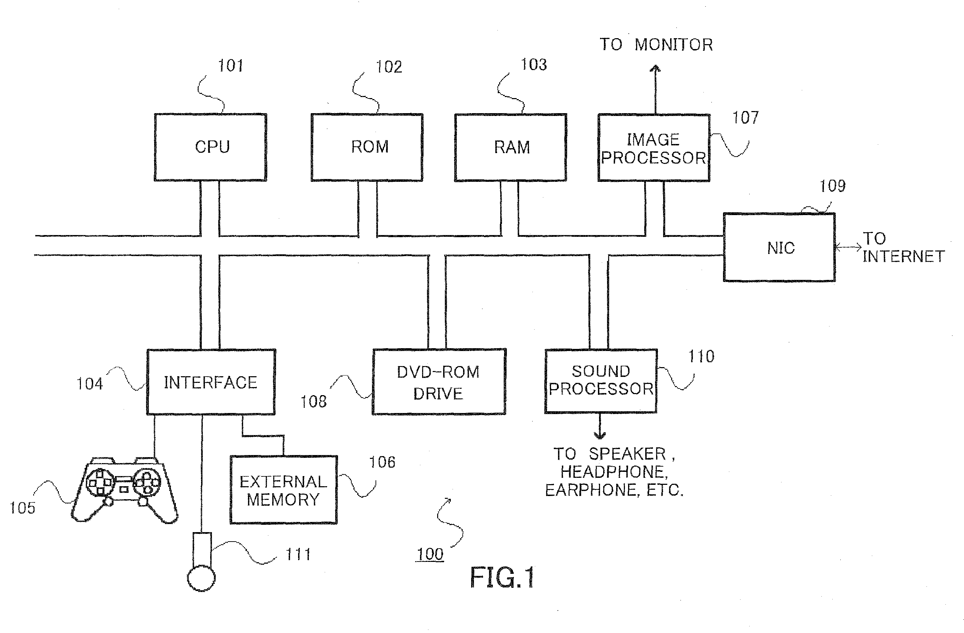

FIG. 1 is an exemplary diagram showing a schematic configuration of a typical information processing device that realizes a function of a device according to an embodiment of the present invention. The following explanation will be given with reference to FIG. 1.

An information processing device 100 includes a CPU (Central Processor) 101, a ROM 102, a RAM (Random Access Memory) 103, an interface 104, a controller 105, an external memory 106, an image processor 107, a DVD-ROM (Digital Versatile Disk-ROM) drive 108, an NIC (Network Interface Card) 109, a sound processor 110, and a microphone 111.

When a DVD-ROM that stores a game program and data is inserted to the DVD-ROM drive 108 and the information processing device 100 is turned on, the program is executed and an input device according to the present embodiment is realized.

The CPU 101 controls the operation of the whole information processing device 100, and is connected to each component to exchange control signals and data with it. The CPU 101 can perform arithmetical operations, such as addition, subtraction, multiplication and division, logical operations, such as logical addition, AND operation, and logical NOT, and bit operations, such as bitwise OR, bitwise AND, bit inversion, bit shift, and bit rotation using an Arithmetic Logic Unit (ALU) (not shown) with respect to a register (not shown) which is memory area allowing a high-speed access. Further, there are some CPUs 101 which are configured to be able to perform saturate calculation, such as addition, subtraction, multiplication and division, and vector operation like trigonometric function at a fast speed in order to cope with a multimedia processing, and there are some CPUs having a coprocessor.

An Initial Program Loader (IPL), which is executed immediately after the power is turned on, is stored in the ROM 102, and when executed, makes a program stored on the DVD-ROM be read into the RAM 103 and executed by the CPU 101. Further, an operating system program and various data that are necessary for controlling the operation of the whole information processing device 100 are stored in the ROM 102.

The RAM 103 is a temporary memory for data and programs, and retains a program and data read out from the DVD-ROM and data necessary for game progressing and chat communications. The CPU 101 sets a variable area in the RAM 103, and performs operation directly using the ALU to a value stored in the variable area, once stores a value stored in the RAM 103 in the register to perform operation on the register, and writes back an operation result in a memory.

The controller 105 connected via the interface 104 receives an operation input given by a player for playing a game. Note that the detail of the controller 105 will be discussed later.

The external memory 106 detachably connected via the interface 104 rewritably stores data representing a play state (a past record or the like) of a game or the like, data representing a progress status of a game, log (record) data of chat communications for a case of a network match-up, etc. As needed, a user can record such data into the external memory 106 by entering an instruction input via the controller 105.

A DVD-ROM to be loaded in the DVD-ROM drive 108 stores a program for realizing a game and image data and sound data that accompany the game. Under the control of the CPU 101, the DVD-ROM drive 108 performs a reading process to the DVD-ROM loaded therein to read out a necessary program and data, which are to be temporarily stored in the RAM 103, etc.

The image processor 107 processes data read out from a DVD-ROM by means of the CPU 101 and an image calculation processor (not shown) possessed by the image processor 107, and records the processed data in a frame memory (not shown) possessed by the image processor 107. Image information recorded in the frame memory is converted to video signals at predetermined synchronization timings and uttered to a monitor (not shown) connected to the image processor 107. This enables various types of image display.

The image calculation processor can perform, at a high speed, overlay calculation of two-dimensional images, transparency calculation such as α blending, etc., and various saturation calculations.

The image calculation processor can also perform a high-speed calculation of rendering polygon information that is disposed in a virtual space when the virtual space is a three-dimensional and affixed with various texture information by Z buffering and obtaining a rendered image of the polygon disposed in the virtual space as seen panoramically from a predetermined view position.

Furthermore, the CPU 101 and the image calculation processor can operate in cooperation to depict a string of letters as a two-dimensional image in the frame memory or on each polygon surface in accordance with font information that defines the shape of the letters.

The NIC 109 connects the information processing device 100 to a computer communication network (not shown) such as the Internet, etc. The NIC 109 is constituted by a 10BASE-T/100BASE-T product used for building a LAN (Local Area Network), an analog modem, an ISDN (Integrated Services Digital Network) modem, or an ADSL (Asymmetric Digital Subscriber Line) modem for connecting to the Internet via a telephone line, a cable modem for connecting to the Internet via a cable television line, or the like, and an interface (not shown) that intermediates between any of these and the CPU 101.

The sound processor 110 converts sound data read out from a DVD-ROM into an analog sound signal and outputs such sound signal from a speaker (not shown) connected thereto. Under the control of the CPU 101, the sound processor 110 generates a sound effect or music data that shall be released in the progress of a game, and outputs a sound corresponding to the data from the speaker.

When sound data recorded in the DVD-ROM is MIDI data, the sound processor 110 refers to sound source data possessed by such MIDI data, and converts the MIDI data into PCM data. Moreover, when sound data is an already-compressed data in, for example, an ADPCM format or an Ogg Vorbis format, the sound processor 110 extracts such data and converts it into PCM data. Sound outputting becomes possible as PCM data is subjected to D/A (Digital/Analog) conversion at a timing corresponding to a sampling frequency and is output from the speaker.

Furthermore, the information processing device 100 can be connected with the microphone 111 via the interface 104. In this case, A/D conversion is performed on an analog signal from the microphone 111 at an appropriate sampling frequency to generate a digital signal in a PCM format so that the sound processor 110 can executes a process like mixing.

The information processing device 100 may use a large capacity external storage device such as a hard disk or the like and configure it to serve the same function as the ROM 102, the RAM 103, the external memory 106, a DVD-ROM loaded in the DVD-ROM drive 108, or the like.

The above-explained information processing device 100 corresponds to a so-called "consumer television game device", but the present invention can be realized by any device that executes an image processing for displaying a virtual space. Accordingly, the present invention can be carried out using various computing machines, such as a cellular phone device, a portable game device, a karaoke device, and an ordinary business computer.

For example, an ordinary computer includes, likewise the information processing device 100 described above, a CPU a RAM, a ROM, a DVD-ROM drive, and an NIC, an image processor with simpler capabilities than those of the information processing device 100, and a hard disk drive as its external storage device with also compatibility with a flexible disk, a magneto-optical disk, a magnetic tape, etc. Such a computer uses a keyboard, a mouse, etc. instead of a controller 105 as its input device.

Next, an explanation will be given of a process executed by each unit of a game device 200 of the embodiment. The following describes an example case where the game device 200 displays an image of a model (instructor) and information for informing a player of a breathing timing in order to guide various pauses of yoga or stretch to the player. The present invention is, however, not limited to yoga and stretch, and can be applied to a case where the game device 200 guides the player to any exercise, a pause, or the like.

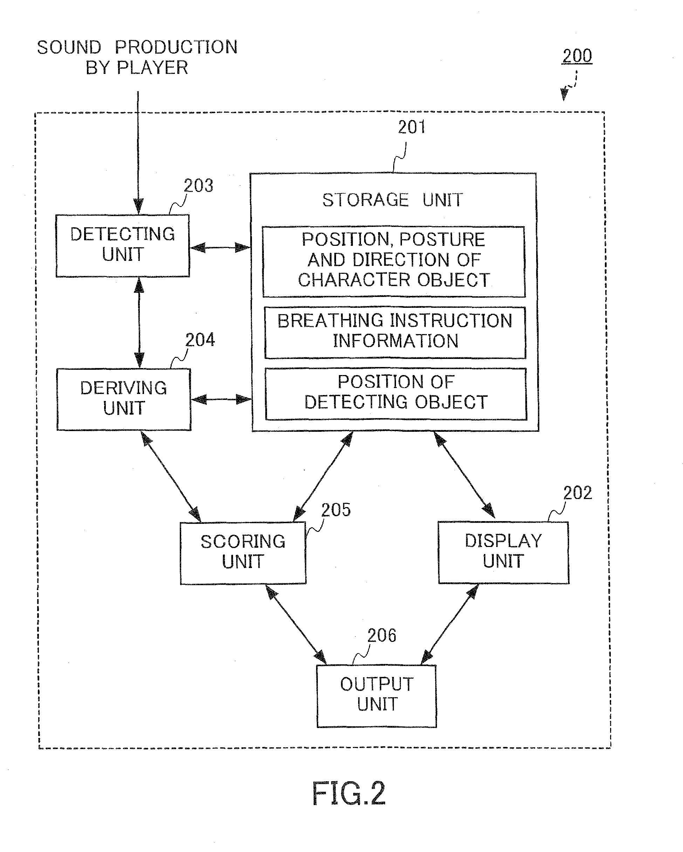

FIG. 2 is a diagram for explaining a configuration of the game device 200 of the embodiment. As shown in the figure, the game device 200 has a storage unit 201, a display unit 202, a detecting unit 203, a deriving unit 204, a scoring unit 205, and output unit 206.

The storage unit 201 stores, in association with an elapsed time, information indicating a position, a posture and an orientation of a character object (hereinafter, "model object") 301 which is a model in a virtual space. The CPU 101 and the RAM 103 cooperates together to function as the storage unit 201.

A position is represented by a spatial coordinate defined in the virtual space beforehand. How to decide the spatial coordinate system is optional, and for example, a rectangular coordinate system having three axes orthogonal with one another can be used, and a spherical coordinate system like a spherical coordinate having one moving radius and two amplitudes can also be used. A posture is defined based on a velocity (or acceleration) of movement, an angular velocity (or angular acceleration) of rotational movement, a bone shape configuring a character object, and the like. A direction is defined by, for example, a directional vector set for the model object 301. The length of the directional vector is optional, but is a unit vector in the embodiment, and the direction thereof can be set arbitrarily.

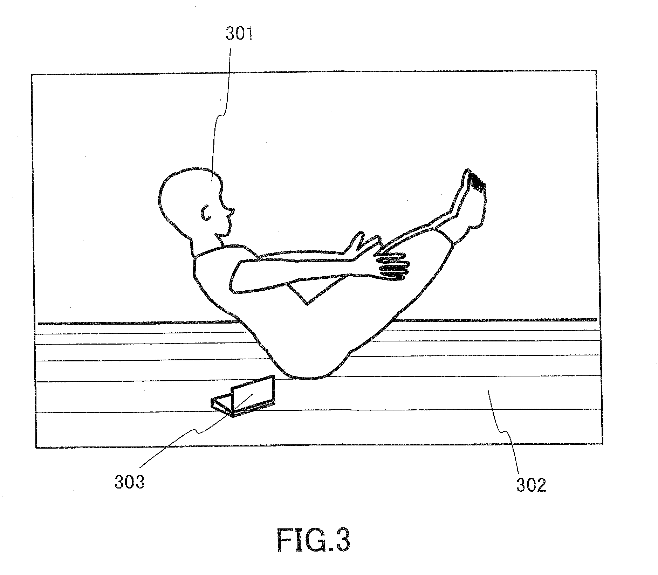

FIG. 3 is an example of a screen displayed on the monitor by the display unit 202 of the game device 200 of the embodiment. Character objects, including the model object 301, a background object 302, and a game device object 303 that corresponds to the game device 200, are displayed as polygon images acquired by pasting plural textures on surfaces of the skeletal bones. In this figure, the game device 200 is navigating a "V-shaped pause", one of yoga pauses. The storage unit 201 stores, for example, data representing a position, a posture and an orientation of the model object 301 in a chronographic order to cause the player to have various pauses including a "V-shaped pause". For example, the storage unit 201 stores respective change amounts of positions of the model object, postures, and orientations thereof in association with elapsed times in accordance with predetermined procedures of the "V-shaped pause", such as (1) sitting down on the floor while bending the player's both knees, (2) straightening the player's back, (3) lifting up the player's legs while exhaling and straightening the player's knee, (4) straightening both hands and the player's back while inhaling, and (5) taking a deep breath.

Moreover, the storage unit 201 stores breathing instruction information indicating a time period in which the player should exhale when the player has (has had) individual pause. A time period in which the player should inhale may be also stored. For example, in order to cause the player to inhale a deep breath for 30 seconds in the "V-shaped pause", the storage unit 201 stores breathing instruction information instructing "to inhale a deep breath for 30 seconds from a timing when starting taking a deep breath" or "to inhale for five seconds and to exhale for five seconds from a timing when starting taking a deep breath, and to repeat this breathing three times". Any data format is applicable for the breathing instruction.

The kind of the pause, the procedures, and times thereof are merely examples, and it is needless to say that an embodiment in which the kind, the procedures, the time and an image composition for guiding are changed can be employed.

The display unit 202 generates image data of the model object 301 based on the position, the posture and the orientation of the model object 301 stored in the storage unit 201 in association with an elapsed time, and for example, as shown in FIG. 3, displays an image, in which character objects including the model object 301 are arranged, on the monitor.

Moreover, the display unit 202 displays information whether or not current time is included within a time period in which the player should exhale based on the breathing instruction information stored in the storage unit 201. For example, when the current time is included within a time period in which the player should exhale, the display unit 202 colors the background object 302 in red and displays it, and when a current time is included within a time period in which the player should inhale, the display unit 202 colors the background object 302 in blue and displays it. Alternatively, when the current time is included within a time period in which the player should exhale, the display unit 202 may display a predetermined message or an image urging the player to exhale like "exhale slowly for five seconds", and when a current time is included within a time period in which the player should inhale, the display unit 202 may display a predetermined message or an image urging the player to inhale like "inhale slowly for five seconds".

Moreover, the display unit 202 displays a recommended location of the game device 200 when the player has each pause as the game device object 303. For example, at this location, it is expected that the player can easily view the screen when the player has (has had) a pause, and such location is set beforehand. The CPU 101 and the image processor 107 cooperate together to function as the display unit 202.

The detecting unit 203 detects a sound of breathing/non-breathing by the player through the microphone 111, and stores a piece of sound information acquired by the detection in a predetermined buffer area. The microphone 111 may be embedded in the game device 200, or may be a headset type microphone attached to the head of the player for use, and both microphones may be used separately depending on a pause. The CPU 101, the RAM 103, the interface 104, and the sound processor 110 cooperate together to function as the detecting unit 203.

The deriving unit 204 derives a time period in which the player is exhaling based on the sound information detected by the detecting unit 203 and stored in the predetermined buffer area. That is, the deriving unit 204 derives when the player is exhaling and whether or not the player is exhaling at a current time. The CPU 101, the RAM 103, and the sound processor 110 cooperate together to function as the deriving unit 204.

The detecting unit 203 and the deriving unit 204 execute a process of separating a breathing sound and a non-breathing sound of the player from each other, but such a process will be discussed later.

The scoring unit 205 gives scores the breathing of the player based on a degree of agreement between the time period in which the player should exhale indicated by the breathing instruction information, stored in the storage unit 201 beforehand and a time period in which the player is exhaling, derived by the deriving unit 204. The scoring unit 205 may score based on two situations: matching/not matching or more situations, and may score based on a rate (percentage) or a score indicating how much such time periods match. Any method is applicable in the scoring. The CPU 101 functions as the scoring unit 205.

The output unit 206 outputs a result of scoring by the scoring unit 205 through the monitor or the speaker using, for example, a number, a letter, a symbol, an image or a sound. The CPU 101, the image processor 107, and the sound processor 110 cooperate together to function as the output unit 206.

### [Separation between Breathing Sound and Non-breathing Sound]

Next, an explanation will be given of a process that the deriving unit 204 separates a breathing sound and a non-breathing sound from each other based on sound information detected by the detecting unit 203.

First, the detecting unit 203 detects a sound and acquires a piece of sound information. Typically, the detection unit 203 acquires sound information through a sound inputting device like the microphone 111. The sound information is one that a displacement when pressure, a position and the like of a medium like air vibrate is quantified.

Hereinafter, it is supposed that a displacement of a wave from a reference position in sound inputting from the microphone 111 can be acquired by the input/output port of the CPU 101 via the interface 104. When a read-out instruction from a port possessed by the CPU 101 is used or when the CPU 101 takes over an inputting/outputting having undergone memory mapping, a read-out instruction of a value from a predetermined address is used to read out a displacement from the input/output port.

In the embodiment, it is supposed that a sampling rate of the sound information from the microphone 111 is G, and a ring buffer area for buffering the sound information is prepared in the RAM 103. The ring buffer can be expressed by a structure having the following two members.
(1) An array "buf" having "A" number of elements each for storing a displacement. The respective elements are accessible as buf[0], buf[1], ..., and buf [A-1].
(2) A suffix "next" indicating a location where an element should be added at next.

To facilitate understanding, the ring buffer area for buffering sound information from the microphone 111 is called "inp", and individual members of the ring buffer "inp" are expressed as inp.buf[0], inp.buf[1], ..., inp.buf[A-1], and inp.next.

In the case of 8-bit sampling, each element of the array "buf" is expressed by 1 bite, and in the case of 16-bit sampling, each element of the array "buf" is expressed by 2 bites. As explained above, since the sampling rate is G, the number of pieces of the sound information that can be stored in the ring buffer "inp" corresponds to a time A/G. An explanation will be given of a method of always reflecting sound information of a recent time A/G in the ring buffer "inp".

In order to update the ring buffer "inp" with newest information at the sampling rate G, a timer interruption of the CPU 101 is used. That is, a timer interruption is caused at a time period 1/G, and in an interrupt handler, an input read-in process to be discussed below is executed.

The following, describes an embodiment where a timer interruption is used to repeat a process having the same time period explanation, but other methods, such as counting a time in a repeating loop and standing by to set a time period in which a unit of a process is executed to be constant, can be employed.

In the following explanation, to facilitate understanding, regarding a control like interrupt disabling or interrupt enabling, and an exclusion control using a semaphore or the like in an interruption process, explanation thereof will be omitted appropriately. Those skilled in the art can appropriately add such process as needed.

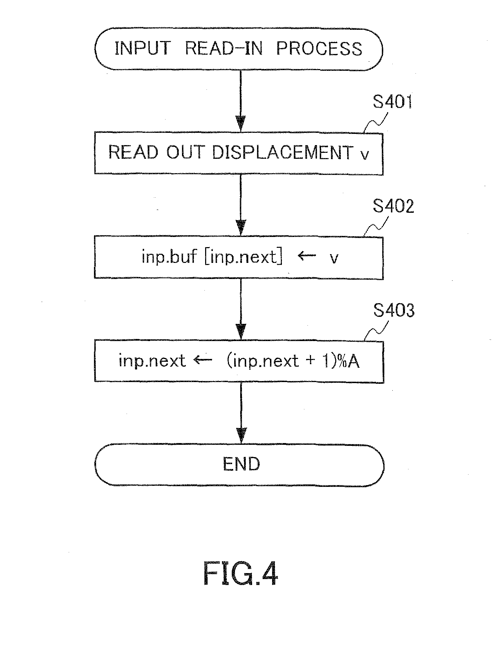

FIG. 4 is a flowchart showing the flow of the control of the input read-in process. An explanation will be given with reference to this flowchart.

As the input read-in process is activated, first, the CPU 101 reads out a value "v" of a displacement from an input port of the sound information from the microphone 111 (step S401).

The CPU 101 stores the value "v" in inp.buf[inp.next] (step S402), updates the value of inp.next to (inp.next+1)%A (step S403), and adds the value "v" to the ring buffer "inp". Note that x%y means a remainder obtained by dividing x by y.

After the step S403, the input read-in process is completed. When this process is driven by an interruption, various processes for terminating an interrupt handler are also executed.

By executing the foregoing process, data representing a displacement of sound information for a recent time A/G is stored in the ring buffer "inp", and older data is automatically eliminated (overwritten).

The deriving unit 204 performs Fourier conversion on sound information obtained as explained above, and acquires intensities of plural frequency components. Typically, the deriving unit 204 performs high-speed Fourier conversion. When a width of each frequency component is f and the number of stages of the process is N, high-speed Fourier conversion divides input sound information into frequency strength components of 0, f, 2f, 3f, ..., and (2^{N}-1)f.

As explained above, since the number of pieces of sound information for a recent time A/G is stored in the ring buffer "inp", it is typical that A number of displacement data stored in inp.buf are subjected to Fourier conversion.

Accordingly, wave displacement data stored in inp.buf[0] to inp.buf[A-1] at a time interval A/G at a this time are subjected to the Fourier conversion process by the deriving unit 204.

A calculation of high-speed Fourier conversion is performed by the CPU 101 on data stored in the ring buffer "inp" through a conventionally well-known technique. A result of Fourier conversion is stored in an array "F" prepared in the RAM 103. That is, in the array "F", an element F[0] stores a strength component of frequency 0 (direct current), an element F[1] stores a strength component of frequency f, an element F[2] stores a strength component of frequency 2f and an element F[2^{N}-1] stores a strength component of frequency (2^{N}-1), respectively.

Since Fourier conversion is repeatedly performed at an appropriate timing, if the array "F" is referred, a latest frequency distribution of sound information can be obtained.

The time period in which Fourier conversion is performed may be less than or equal to A/G. For example, using an integer B where 0 < B ≤ A, when Fourier conversion is performed at a time period B/G, the displacement data string to be subjected to Fourier conversion are:
where inp.next ≥ B,
inp.buf[next-B], inp.buf[next-B+1], ..., inp.buf[next-2], inp.buf[next-1];
and where inp.next < B,
inp.buf[A-(B-inp.next)], inp.buf[A-(B-inp.next)+1], ..., inp.buf[A-2], I
np.buf[A-1], inp.buf[0], inp.buf[next-B+1], ..., inp.buf[next-2], inp.buf[next-1].
Those correspond to picking up latest B number of pieces of displacement data from the ring buffer "inp".

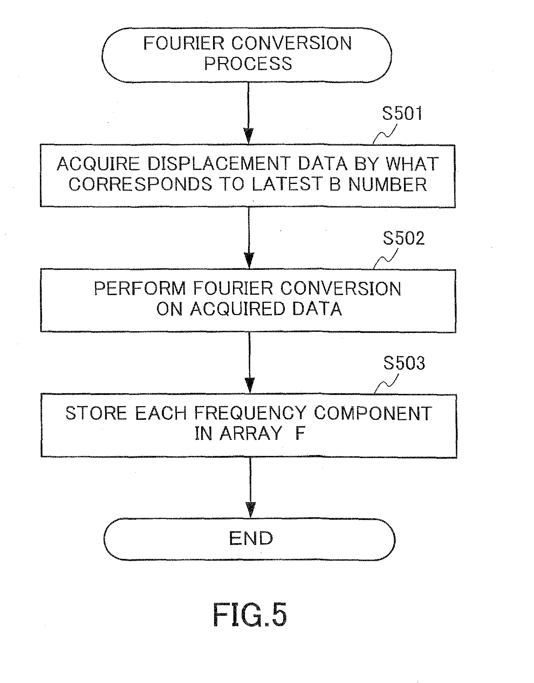

The flow of the control of the Fourier conversion process by the deriving unit 204 at a time period B/G will be clarified once again. FIG. 5 is a flowchart showing the flow of the control of the Fourier conversion process by the deriving unit 204 at a time period B/G. An explanation will be given with reference to this flowchart.

First, the CPU 101 acquires latest B number of pieces of wave displacement data on sound information from the ring buffer "inp" (step S501).

Next, the CPU 101 performs high-speed Fourier conversion on B number of pieces of the displacement data (step S502).

The strength component of a frequency 0 (direct current), the strength component of a frequency f, the strength component of a frequency 2f, and the strength component of a frequency (2^{N}-1)f are respectively stored in the element F[0], the element F[1], the element F[2] and the element F[2^{N}-1] in the array F (step S503), and the process is terminated.

The latest displacement data on sound information is always to be stored in the ring buffer "inp", and a latest Fourier conversion result is always to be stored in the array "F". Accordingly, the deriving unit 204 refers to those contents, and determines whether or not it is a breathing sound or a non-breathing sound, and, derives a time area corresponding to a breathing sound.

The deriving unit 204 uses the following parameters:
(a) A sampling rate of the sound information to be received. In the embodiment, the sampling rate is "G" [Hz] as explained above, and is, for example, 8000 Hz.
(b) A frequency interval of a frequency component of Fourier conversion. In the embodiment, the frequency interval is f [Hz] as explained above, and is, for example, 31.25 Hz.
(c) A first frequency band. In the embodiment, greater than or equal to 31. 25 Hz and less than or equal to 187.5 Hz.
(d) A second frequency band. In the embodiment, greater than or equal to 500 Hz and less than or equal to 2000 Hz. It is higher than the first frequency band.
(e) A third frequency band. In the embodiment, greater than or equal to 3812.5 Hz and less than or equal to 4000 Hz. It is higher than the second frequency band.

The upper limit 4000 Hz is based on a sampling theorem, and is just a half of the sampling frequency "G".
(f) A first threshold. This indicates "sensitivity" for determining whether or not a sound is a breathing sound or a non-breathing sound, and if it is small, a reaction becomes sensitive, but a possibility of failing to determine that a sound is the breathing sound becomes high by what corresponds to the reduction of the first threshold. If it is large, a reaction becomes weak, but a possibility of failing to determine that a sound is the breathing sound becomes high by what corresponds to the increment of the first threshold. An appropriate constant may be set in accordance with the sampling bit number of sound information, and may be adjusted by the player appropriately.
(g) A second threshold. In the embodiment, greater than or equal to 0.375 times than the first threshold.
(h) A third threshold. In the embodiment, greater than or equal to 0.25 times than the first threshold.
(i) A first threshold time. In the embodiment, about 4/60 second.
(j) A second threshold time. In the embodiment, about 4/60 second.
(k) A number of thresholds. In the embodiment, about nine.

The foregoing values may be increased or decreased within a range where determination can be carried out correctly. For example, if the foregoing values are changed within a range from 90 % to 110 %, there is no large difference in the capability of determination.

Based on the foregoing parameters, the deriving unit 204 performs the following determination process at a time period C/G. A condition C ≤ B is satisfied, and typically, "C" is a divisor of "B".

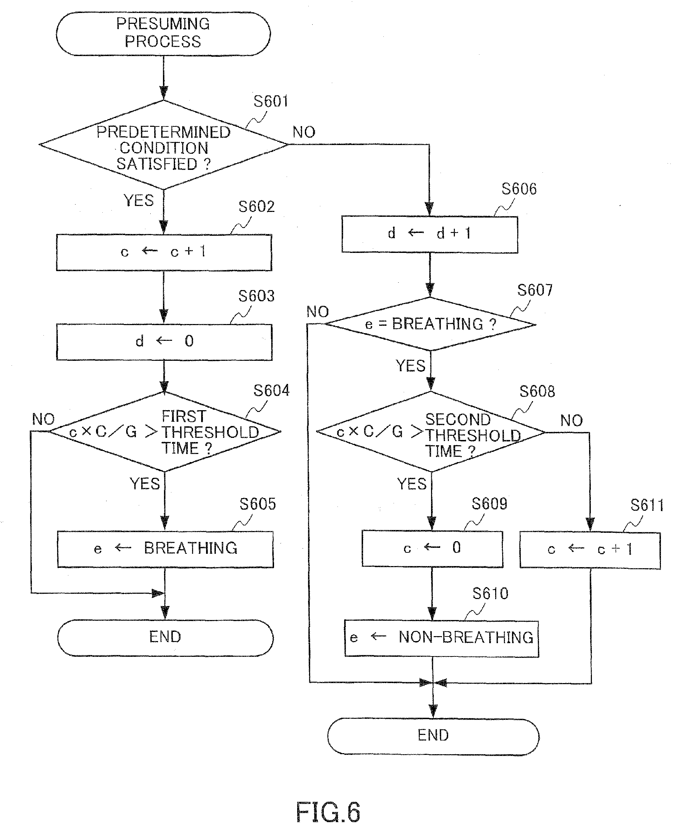

FIG. 6 is a flowchart showing the flow of the control of a deriving process by the deriving unit 204 executed for each time period C/G. An explanation will be given with reference to this flowchart.

First, the deriving unit 204 refers to the array F and determines whether or not all of the following conditions are satisfied (step S601):
(s) At least any one of the intensities of frequency components in the first frequency band is greater than the predetermined first threshold;
(t) The number of the intensities of frequency components in the second frequency band greater than the predetermined second threshold is greater than or equal to the predetermined number of thresholds; and
(u) At least any one of the intensities of frequency components in the third frequency band is greater than the predetermined third threshold.

Because of the sampling rate "G" and a disintegration precision f of a frequency by Fourier conversion, which elements in the array "F" respectively correspond to the first frequency band, the second frequency band and the third frequency band is uniquely set. In general, plural elements in the array "F" are allocated to each of the first frequency band, the second frequency band, and the third frequency band.

Accordingly, the condition (s) is satisfied if at least any one of the following conditions is satisfied:
With respect to elements F[D1], ..., F[E1] of the array F in the first frequency band and the first threshold H1,
F[D1] > H1, ..., F[E1] > H1

Moreover, with respect to elements F[D2], ..., F[E2] of the array F in the second frequency band and the second threshold H2, if the number of ones which satisfy:
F[D2] > H2, ..., F[E2] >H2,
is greater than or equal to the predetermined number of thresholds, the condition (t) is satisfied.

Further, with respect to elements F[D3], ..., F[E3] of the array "F" in the third frequency band and the third threshold H3, if at least any one of the following condition is satisfied, the condition (u) is also satisfied.
F[D3] > H3, ..., F[E3] > H3

It should be noted that D1 < ... < E1 < ... < D2 < ... < E2 < ... <D3 <... <E3.

The RAM 103 has the following three areas.
(a) Positive counting area "c". Recording a number of processes by the deriving unit 204 beginning after the foregoing conditions become satisfied.
(b) Negative counting area "d". Recording a number of processes by the deriving unit 204 beginning after the foregoing conditions becomes not satisfied.
(c) Breathing flag area "e". Recording whether or not a condition of sound information determined at last is a breathing sound.

As a result of the determination of the foregoing conditions, when the foregoing conditions are satisfied (step S601: YES), the value of the positive counting area "c" is incremented by 1 (step S602), and sets the value of the negative counting area "d" to 0 (step S603).

Subsequently, it is determined whether or not a time c x C/G from after the conditions become satisfied exceeds the first threshold time (step S604). When it exceeds (step S604: YES), the breathing flag area "e" is set to be "breathing" (step S605), and the process is terminated. Conversely, when it does not exceed (step S604: NO), the process is terminated.

In contrast, when the foregoing conditions are not satisfied (step S601: NO), the value of the negative counting area d is incremented by 1 (step S606). Subsequently, it is determined whether or not the value of the breathing flag area e is "breathing" (step S607), and when it is not "breathing" (step S607: NO), the process is then terminated.

Conversely, when it is "breathing" (step S607: YES), it is determined whether or not a time d x C/G after the foregoing conditions become not satisfied exceeds the second threshold time (step S608). When it exceeds (step S608: YES), the value of the positive counting area c is set to 0 (step S609), and the breathing flag area e is set to be "non-breathing" (step S 610), and, the process is terminated. In contrast, when it does not exceed (step S608: NO), the value of the positive counting area c is incremented by 1 (step S611), and the process is terminated.

By executing the foregoing process, the deriving unit 204 derives the following:
(a) a breathing sound is continuously input if a time in which the foregoing conditions are being continuously satisfied exceeds the first threshold time,
(b) a breathing sound is further continuously input if a time in which the foregoing conditions are not continuously satisfied after it is determined that inputting of a breathing sound is continuously carried out is less than or equal to the second threshold time, and
(c) inputting of a breathing sound is terminated if a time in which the foregoing conditions are not continuously satisfied after it is determined that inputting of a breathing sound is continuously carried out exceeds the second threshold time.

By carrying out such determination, separated from each other are sound information when a human exhales to the microphone 111 like "phew, phew" or when the human excites himself/herself and takes a hard breath like "puffing and blowing", and sound information by a sound production in a normal condition other than the foregoing cases. As the foregoing conditions are satisfied for greater than or equal to the first threshold time, it is determined that the sound information represents a breathing sound. During a period when it is continuously determined that sound information represents a breathing sound, a time in which the foregoing conditions are not satisfied is less than the second threshold time, it is continuously determined that sound information represents a breathing sound.

Each threshold time, each threshold, and each number of thresholds can be set appropriately based on a kind of the sound information input by the player, a performance of a hardware realizing the game device 200, a sampling rate of sound information, the precision of Fourier conversion and the like.

A latest deriving result whether or not sound information represents a breathing sound or a non-breathing sound is stored in the breathing flag area e, and the update time period of such area is C/G.

Accordingly, it is desirable that processes executed by the scoring unit 205 and the output unit 206 should have a time period of C/G. In this case, in particular, it is preferable that the scoring unit 205 and the output unit 206 should cooperate together to execute a cooperative output process always right after the deriving process by the deriving unit 204 is terminated. However, such a time period can be changed appropriately in accordance with the content of a process to be executed next.

As explained above, a deriving result indicating whether or not the sound information represents a breathing sound or a non-breathing sound is output at a time period C/G, the following two arrays having C number of elements are prepared in the RAM 103.
(a) An array "voice" which stores information representing a non-breathing sound. Terms voice[0], ..., voice[C-1] store displacement data of sound information of a non-breathing for a latest time length C/G.
(b) An array "nonvc" which stores information representing a breathing sound. Terms nonvc[0], ..., nonvc[C-1] store displacement data of sound information of a breathing sound by what corresponds to a latest time length C/G.

The arrays "voice" and "nonvc" are updated at a time period C/G.

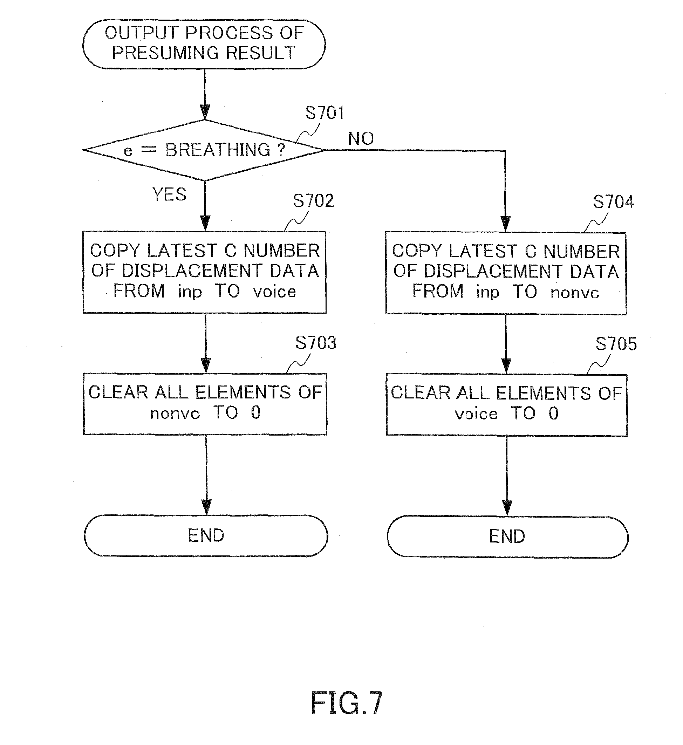

FIG. 7 is a flowchart showing the flow of the control of an output process for a deriving result activated at a time period C/G. An explanation will be given with reference to this flowchart.

In the output process, first, the CPU 101 checks whether or not the breathing flag area "e" prepared in the RAM 103 is "breathing" (step S701). When it is "breathing" (step S701: YES), latest data by what corresponds to C number stored in the ring buffer "inp" are copied in the array "voice" (step S702), all of the elements of the array "nonvc" are set to 0 to clear those (step S703), and the process is terminated.

Conversely, when it is not "breathing" (step S701: NO), latest data by what corresponds to C number stored in the ring buffer "inp" are copied in the array "nonvc" (step S704), all of the elements of the array voice are set to 0 to clear those (step S705), and the process is terminated.

In this fashion, to the array "voice", the input sound information is directly output regarding an interval of the sound information derived that the player inputs it with a normal sound production, and a displacement "0" is output regarding an interval other than the foregoing interval.

In contrast, to the array "nonvc", a displacement "0" is output regarding an interval of sound information derived that the player inputs it with a normal utterance, and input sound information is directly output regarding an interval other than the foregoing interval.

As explained above, it becomes possible to separate a sound when a human being takes a breath and a sound other than the foregoing case from each other, and it becomes possible to easily acquire the sound when the human being takes a breath. The deriving unit 204 can derives a time period when the player is exhaling based on values stored in the array "voice" and the array "nonvc". A deriving result is used for scoring of a breathing timing of the player by the scoring unit 205 to be discussed later.

Moreover, by employing appropriate parameters, it becomes possible to easily separate a sound when a human being takes a breath and a sound other than the foregoing case from each other for a large number of humane with a little amount of calculation.

In the foregoing explanation, although the ring buffer and the arrays each having a fixed length are used to store wave displacement data on sound information, various structures which can store data string like a queue and a list can be employed.

### [Scoring Process]

Next, an explanation will be given of a process by the scoring unit 205 of comparing a deriving result by the deriving unit 204 and breathing instruction information stored in the storage unit 201 and of scoring a timing when the player exhales.

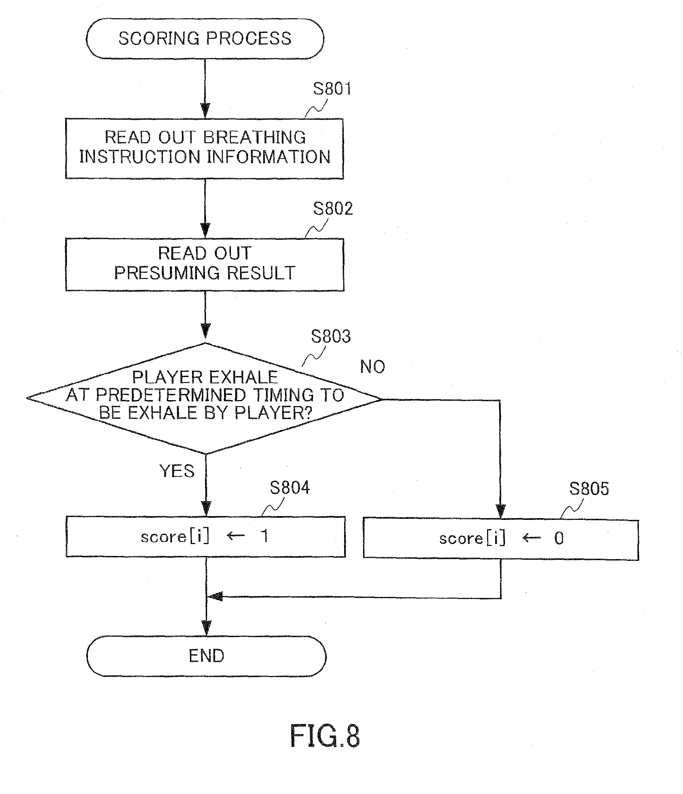

FIG. 8 is a flowchart showing the flow of a scoring process by the scoring unit 205. An explanation will be given with reference to this flowchart.

In the embodiment, an array score having N number of elements (N is an integer greater than or equal to 1) and storing a result of scoring is prepared in the RAM 103. The respective elements are accessible as score[0], score[1], ..., score[N-1].

The scoring unit 205 gives scores whether or not the player exhales a breath at a timing when the player should exhale while setting a time period when the player should exhale and margin times before and after such time period as a scoring time period. Since the player may possibly exhale before and after a time period when the player should exhale, it is preferable to have a margin time. Based on M number (M is an integer greater than or equal to 1) of the individual values of the array "nonvc" and the array "voice" in a scoring time period, the scoring unit 205 stores a result of scoring at each time in each element from score[0] to score[M-1] of the array "score". This will be explained in more detail below.

First, the scoring unit 205 reads out breathing instruction information indicating a time period when the player should exhale and stored in the storage unit 201 beforehand (step S801), and reads out the values of the array "nonvc" and the array "voice" which are deriving results by the deriving unit 204 (step S802). However, in the embodiment, it is fine if whether or not the player exhales at an appropriate timing and for an appropriate time length can be determined, only the array "nonvc" representing a breathing sound may be read out.

The scoring unit 205 determines whether or not the player exhales at a predetermined breathing timing for each of M number of elements of the array "nonvc" in the scoring time period (step S803). In more detail, a value of the array "nonvc" corresponding to a scoring time "i" is set to 1 (i.e., a value indicating a breathing sound), and when the time period "i" is included in the time period when the player should exhale, the scoring unit 205 determines that the player exhales at an appropriate timing, and if not, the scoring unit 205 determines that the player does not exhale at a timing when the player should exhale.

When determining that the player exhales at the timing at which the player should exhale (step S803: YES), the scoring unit 205 sets an element corresponding to the scoring time "i" to 1 (i.e., a value indicating that the player exhales when the player should exhale) (step S804). Conversely, when determining that the player does not exhales when the player should exhale (step S803: NO), the scoring unit 205 sets an element corresponding to the scoring time i to 0 (i.e., a value indicating that the player does not exhale when the player should exhale) (step S805).

The scoring unit 205 executes the foregoing process for all of scoring times "1" included in the scoring time period.

In the embodiment, the scoring unit 205 gives scores to the breathing of the player based on a rate of the number of elements set to 1 (i.e., a value indicating a breathing sound) in the N number of elements of the array "score". In other words, the scoring unit 205 gives scores the breathing of the player based on a level how much a time period when the player should exhale matches a time period when the player actually exhales. For example, the scoring unit 205 ranks the breathing of the player like "advanced" if the rate of the number of elements determined that the player exhales when the player should exhale is greater than or equal to 80 % as a whole, "intermediate" if greater than or equal to 50 % and less than 80 %, and "beginning" if less than 50 %. It is needless to say that the way how to rank the breathing of the player can be changed arbitrarily, and the acquired rate may be a result of scoring. The content of a message to be notified to the player may be changed based on a rate and a point without ranking.

The output unit 206 outputs a result of scoring by the scoring unit 205 as, for example, a number, a letter, a symbol, an image or a sound. The player becomes able to know whether or not the player takes a breath at an appropriate timing when the player should exhale and how much the player takes a breath correctly. Note that "correct breathing" means that a timing when the player takes a breath matches a recommended timing that the player should exhale set beforehand, or is close to the recommended timing.

### [Use of Scoring Result]

Hereinafter, an explanation will be given of how to guide a pause of yoga or stretch using the scoring result acquired as explained above in detail.

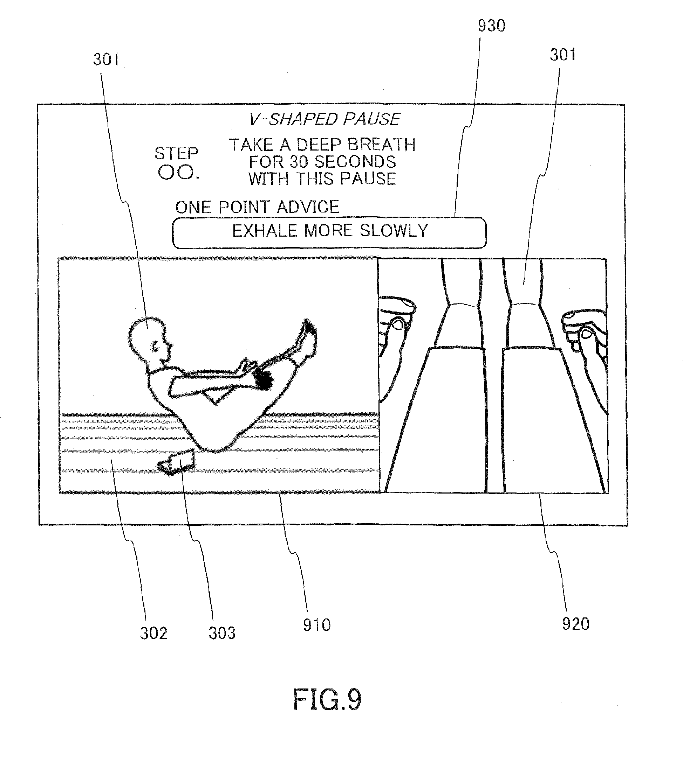

FIG. 9 is an exemplary configuration of a guide screen displayed on the monitor. The guide screen contains an area 901 showing an overview indicating the model object 310 having a model pause, an area which shows a view image expected to be seen when the player has the foregoing pause, and an area 930 showing a result of scoring of a breathing timing of the player.

As shown in the figure, the display unit 202 generates an image in which the model object is looked down based on data representing position, posture and orientation of the model object 301 stored in the storage unit 201 in association with an elapsed time from the start of a pause, and displays the generated image in the area 910. It is optional that from which view point and in which visual orientation the object model 310 is looked down by the display unit 202, and a visual line and a visual point may be changeable. The image displayed is typically a motion image, the player views the displayed motion image and actually moves his/her body as if simulating the model pause of the object model 301. At this time, the detecting unit 203 detects a sound production by the player containing a breathing sound, and the deriving unit 204 determines whether or not a sound production is inherent to breathing as needed. The detecting unit 203 collects a sound production of the player through the microphone 111, but depending on a kind of pause and a type of physique, the player may attach a headset type microphone to collect a sound. Moreover, the scoring unit 205 gives scores whether or not the player exhales at a correct (recommended) timing based on a deriving result by the deriving unit 204 and breathing instruction information stored in the storage unit 201 beforehand, as needed.

In addition, the display unit 202 displays a model pause in the area 910, and generates a view image expected to be seen from the player when the player has the pause based on data representing position, posture and orientation of the model object stored in the storage unit 201, and displays the generated image in the area 920. The image displayed in this area is a motion image or a still image, and the player moves his/her body as actually seen like a displayed image. Accordingly, the player can instantaneously and visually determine how to move his/her body as seen when actually moving his/her body. That is, the player can move his/her body as actually seen a virtual scene displayed in the area 920.

Moreover, the display unit 202 displays, during navigating a pause, information indicating whether or not a current time is within a time period when the player should exhale based on breathing instruction information stored in the storage unit 201. For example, when a current time is within a time period when the player should exhale, the display unit 202 colors and displays the background object 302 to a red color, and when a current time is within a time period when the player should inhale, the display unit 202 colors and displays the background object 302 to a blue color. By means of such displaying while changing the colors, the player can determine a breathing timing intuitively. However, the display unit 202 may display and change a color of a character object (e.g., the model object 301) other than the background object 302, and may display a predetermined message or image indicating whether or not it is a breathing timing. Also, any kind of color is applicable. Moreover, the display unit 202 may display a strength of breathing by changing a color. For example, the storage unit 201 also stores information for specifying a strength of exhaling, in addition to a time period when the player should exhale, and display unit 202 displays with gradations like a deep red when the player should exhale deeply, and a thin red when the player should exhale weakly. Accordingly, the player can instantaneously determine the strength of breathing in addition to a breathing timing. A color for displaying can be freely changed.

Furthermore, the display unit 202 displays a result of scoring of the player's breathing output by the output unit 206 during navigating a pause in the area 930. For example, when the result of scoring output by the output unit 206 is scoring information divided into a predetermined number of hierarchical levels, the display unit 202 may give an advice mating a level, like "very good breathing", or "exhale more slowly". Moreover, the display unit 202 may display a result of scoring using a point or a rank. The output unit 206 may output a result of scoring as a sound acquired by reproducing predetermined sound data.

Note that the configuration of the screen shown in the figure is merely an example, and can be freely changed and displayed. For example, when there are two monitors connected to the game device 200, one monitor displays a screen of a model pause by the model object 301, another monitor displays an image based on a visual line, resulting in a easy-to-view screen configuration.

As explained above, according to the embodiment, the game device 200 can effectively guide the player to have a desired motion. In particular, when navigating a motion like yoga or stretch in which a timing of breathing is important, the game device 200 can let the player to clearly know a timing of taking a breath, and can appropriately determine whether or not the player actually exhales at the correct timing or a recommended timing, and can inform the player of the determination result. Accordingly, it becomes possible to easily navigate the player to have an ideal motion including breathing, and to determine and advise a timing of breathing.

### [Second Embodiment]

Next, another embodiment of the present invention will be explained. In the first embodiment, the scoring unit 205 always gives scores while the detection unit 203 is detecting the sound production of the player, but in the embodiment, a moment when the scoring unit 205 gives scores is changed. An explanation will be given in more detail.

The storage unit 201 further stores a position of an object (hereinafter, "detecting object") 1010 corresponding to the microphone 111 detecting the sound production of the player. When the microphone 111 is embedded in the game device 200, a position of the game device 200 may be simulated as a position of the detecting object 1010.

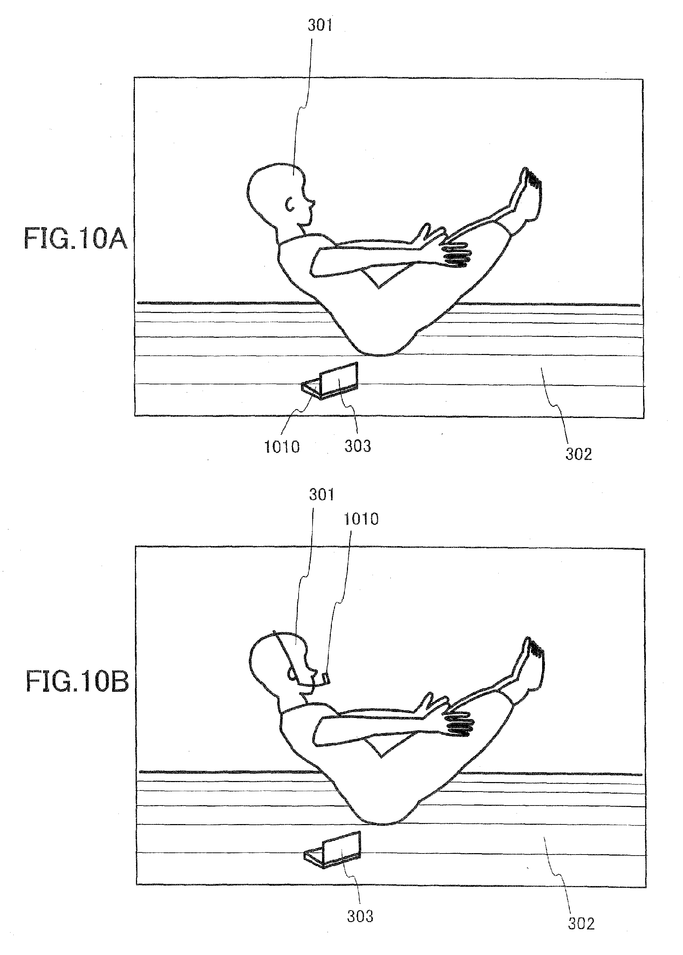

The display unit 202 displays an image of the detecting object 1010 at a position of the detecting object 1010, stored in the storage unit 201, together with the model object 301 and the like. When the microphone 111 is embedded in the game device 200, for example, as shown in FIG. 10A, the position of the detecting object 1010 is set to be same as the position of the game device object 303. In this case, the game object 303 and the detecting object 1010 may be represented by a common object, and only either one of those may be displayed. Moreover, when the player uses a headset type microphone, for example, as shown in FIG. 10B, the detecting object 1010 is displayed at a position of a sound collector of a headset type microphone set in the vicinity of a mouth of the model object 301.

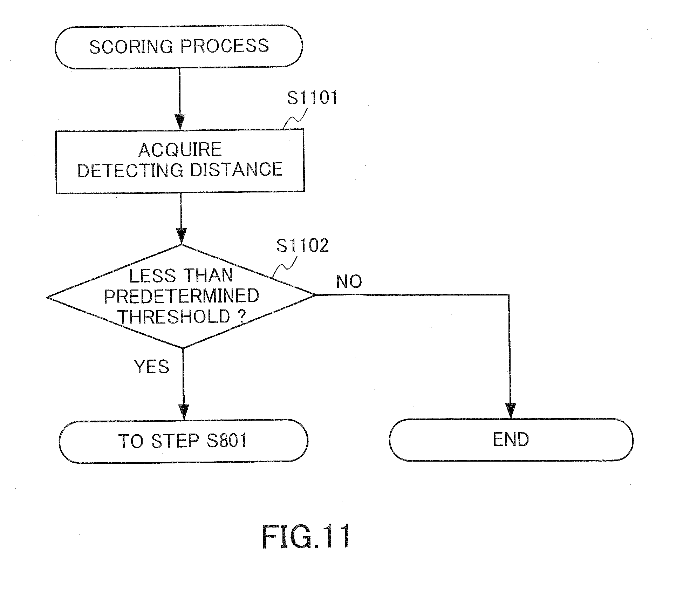

Next, an explanation will be given of a scoring process executed by the scoring unit 205 of the second embodiment. FIG. 11 is a flowchart showing the flow of the scoring process by the scoring unit 205.

First, the scoring unit 205 acquires a distance (detecting distance) between a mouth of the model object 301 and the detecting object 1010 by a coordinate calculation (step S1101).

Next, the scoring unit 205 determines whether or not the acquired detecting distance is less than a predetermined threshold (step S1102). The threshold is a value defined beforehand and stored in the storage unit 201, and is set in accordance with the sensitivity of the microphone 111 and the characteristic thereof.

When determining that the detecting distance is greater than or equal to the threshold (step S1102: NO), the scoring unit 205 terminates the scoring process. In this case, the scoring unit 205 does not score the breathing of the player.

When determining that the detecting distance is less than the threshold (step S1102: YES), the scoring unit 205 executes the processes following to the foregoing step S801. That is, the scoring unit 205 determines whether or not there is a breathing sound at a timing when the player should exhale indicated by the breathing instruction information stored in the storage unit 201 beforehand, in each time (each time when the detecting unit 203 detects a sound production) in a scoring time period, and gives scores the breathing of the player.

As explained above, according to the second embodiment, the game device 200 does not need to always score the breathing of the player, and can merely perform scoring when the detecting distance becomes less than the threshold. Therefore, the process load of the game device 200 can be reduced.

When the player uses a headset type microphone, it can be assumed that the detecting distance is substantially uniform, so that either one of the first embodiment and the second embodiment may be optionally carried out.

### [Third Embodiment]

Next, an explanation will be given of the other embodiment. In the third embodiment, the different point from the foregoing embodiments is to receive an input of a position of the detecting object 1010 by the player. An explanation will be given in more detail.

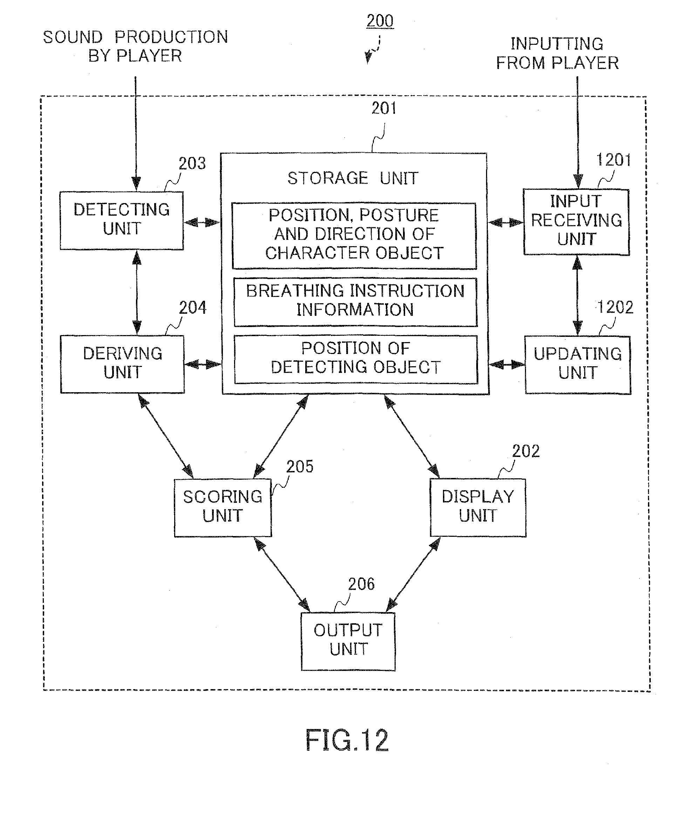

FIG. 12 is a diagram showing a structure of the game device 200 of the third embodiment. As shown in the figure, the game device 200 further has an input receiving unit 1201 and an updating unit 1202. Note that the other configuration elements are the same as those in the foregoing embodiments, so that the explanation thereof will be omitted.

The input receiving unit 1201 receives the input of moving the position of the detecting object 1010 from the player. Typically, the input receiving unit 1201 receives the input from the player using the controller 105 or other inputting devices (keys, buttons, a touch pen and the like).

The updating unit 1202 updates the position of the detecting object 1010 stored in the storage unit 201 based on the input received by the input receiving unit 1201.

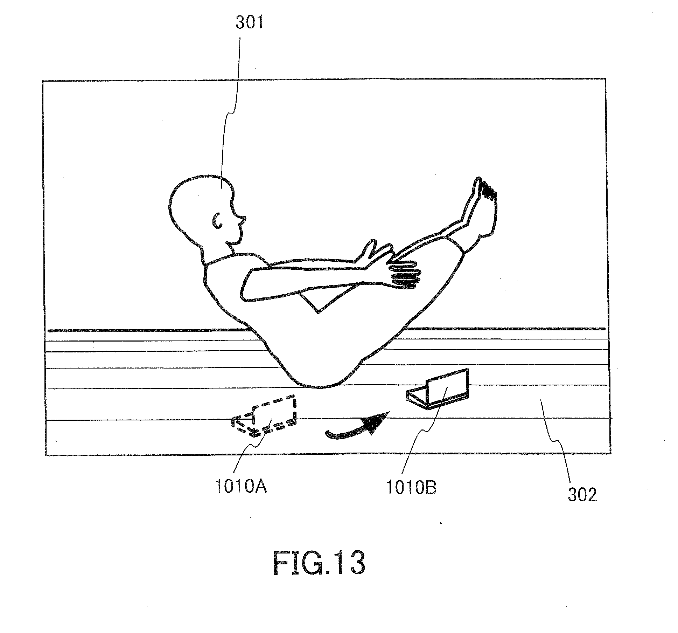

For example, the player moves a touch pen over a touch panel provided in a manner superimposed on the screen of the monitor to drag the detecting object 1010, or presses a cross key of the controller 105 to move the position. FIG. 13 is an example of a screen when the detecting object 1010 is moved. First, the display unit 202 displays the detecting object 1010 at a predetermined initial position. The initial position is shown in the figure as a detecting object 1010A represented by a dashed line. The initial position is, for example, a recommended position to place the monitor or the game device 200.

Next, as the input receiving unit 1201 receives an input of moving the position from the player, the updating unit 1202 updates the position of the detecting object 1010 stored in the storage unit 201, and the display unit 202 displays the detecting object 1010 at the moved position. In the figure, the moved position is shown as a detecting object 1010B represented by a continuous line. As explained above, the player can move the detecting object 1010 to an arbitrary position. Note that the detecting object 1010 is represented by the dashed line or the continuous line in the figure, it is a representation just for facilitating understanding, and only one detecting obj ect 1010 is displayed in reality. The display unit 205 may display an incidental image of the detecting object 1010 for a predetermined time to let the player to know a trace of movement.

When the player views a guide screen while taking various pauses, postures and changing a viewing orientation, if the monitor or the game device 200 is moved to a position where the player can easily view the screen on a case by case basis, the player can easily view the screen. When the microphone 111 detecting the sound production of the player is embedded in the game device 200, if the game device 200 is moved to an arbitrary position, there is a possibility that detection of any sound production becomes difficult depending on the detection sensitivity of the detecting unit 203. When the player moves the game device 200 in a real space, as the position of the detecting object 1010 is also moved in the virtual space, it becomes possible for the game device 200 to reduce a deriving error for a time period when the player exhales which is originating from becoming difficult to collect a sound by the microphone 111.

The input receiving unit 1201 may further receive an input of the position of view point and the orientation of viewing from the user when the model object 301 is looked down. In this case, the storage unit 201 stores data indicating a position of a view point to be looked down, and a orientation of viewing, the input receiving unit 1201 receives instruction inputting of changing the position of the view point and the orientation of viewing, the updating unit 1202 updates the data representing the position of the view point and the orientation of viewing and stored in the storage unit 201 based on the received instruction inputting, and the display unit 202 generates an image in which the model object 301 is looked down based on the data representing the position of the view point and the orientation of viewing and stored in the storage unit 201.

### [Fourth Embodiment]

Next, an explanation will be given of still another embodiment of the present invention. The fourth embodiment relates to an example of the scoring method by the scoring unit 205.

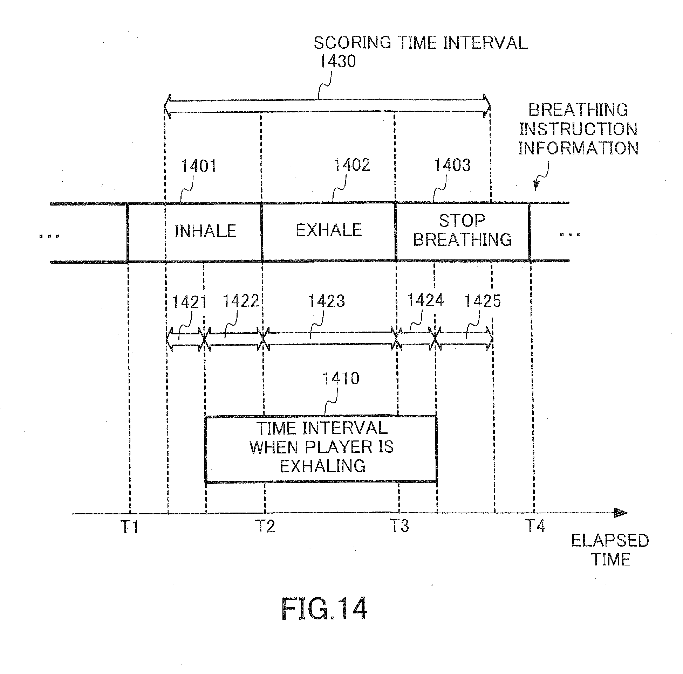

FIG. 14 graphically expresses breathing instruction information or the like stored in the storage unit 201 in a time series. In this example, it is indicated that the player should inhale from an elapsed time T1 to a time T2, should exhale from the elapsed time T2 to a time T3, and should stop breathing from the elapsed time T3 to a time T4. A scoring time period when the scoring unit 205 gives scores the breathing of the player is represented as a time period 1430.

For example, it is supposed that it is derived that the player exhales at a time period 1410. At this time, the scoring unit 205 sets each element of the array "score", included in a time period 1423 that it is derived that the player exhales when the player should exhale, to a value "1" indicating that the player exhales correctly. In contrast, the scoring unit 205 sets each element of the array store, included in time periods 1422, 1424 that it is derived that the player does not exhale when the player should exhale, to a value "0" indicating that the player does not exhale correctly. Moreover, the scoring unit 205 sets each element of the array score, included in an interval 1421 when the player should inhale and the player does not exhale and an interval 1425 when the player should stop breathing and does not exhale, to a value "1".

The scoring unit 205 gives scores the breathing of the player in accordance with a rate of the elements set to "1" in all elements of the array "score" included in the scoring time period 1430. For example, the scoring unit 205 may ranks a result of scoring in accordance with the rate as explained above, or may generate a result of scoring represented by a point. Moreover, the output unit 206 may output a predetermined comment or advice in accordance with the rate of the elements set to "1" in all elements.

### [Fifth Embodiment]

Next, an explanation will be given of yet another embodiment of the present invention. The fifth embodiment also relates to an example of a scoring method by the scoring unit 205.

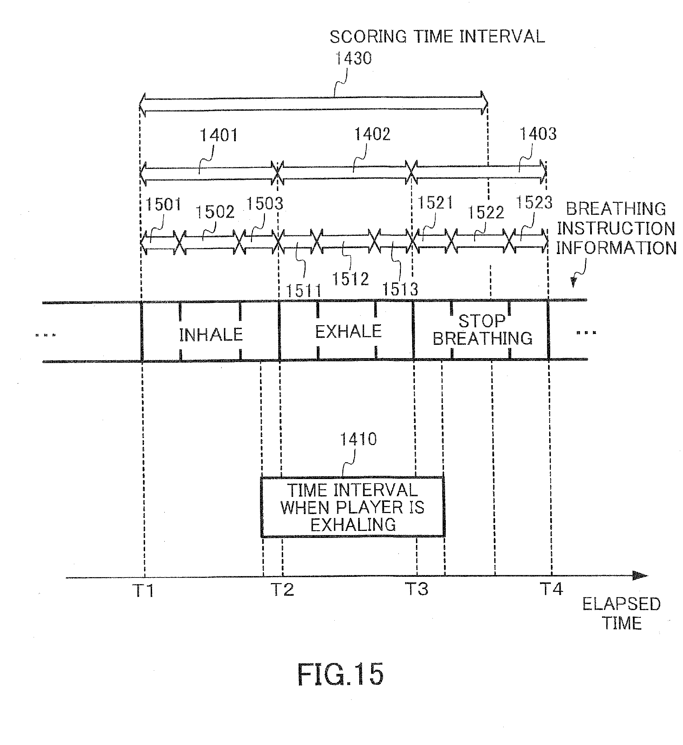

FIG. 15 graphically expresses breathing instruction information or the like stored in the storage unit 201 in a time series. In this example, it is also indicated that the player should inhale over a period from an elapsed time T1 to a time T2, should exhale from the elapsed time T2 to a time T3. In the fifth embodiment, further, a time period 1402 when the player should exhale is divided into a central interval 1512 and margin intervals 1511, 1513. Likewise, a time period when the player should inhale is divided into a central interval 1502 and margin intervals 1501, 1503, and, a time period 1403 when the player should stop breathing is divided into a central interval 1522 and margin intervals 1521, 1523.

For example, let us suppose that it is derived that the player exhales at a time period 1410. At this time, the scoring unit 205 sets each element of the array score, included in the time periods 1511, 1512, 1513 that it is derived that the player exhales when the player should exhale, to a value "1" indicating that the player exhales correctly. The scoring unit 205 sets each element of the array score, included in the time period 1503 that it is derived that the player exhales when the player should inhale and the time period 1521 that it is derived that the player exhales when the player should stop breathing, to a value "0" indicating that the player does not exhale correctly.

Further, the scoring unit 205 gives scores that the player exhales correctly in all time period 1402 when it is derived that the player exhales in the central interval 1512 of the interval 1402 when the player should exhale. In contrast, the scoring unit 205 gives scores that the player does not exhale correctly in all time period 1402 when it is derived that the player does not exhale in the central interval 1512. The same is true for the time period 1401 when the player should inhale and the time period 1403 when the player should stop breathing. In the case of this figure, since the player exhales in the central interval 1512, the scoring unit 205 sets the array score included in the time period 1402 to "1", sets the array score included in the time period 1403 to "1" since the player does not exhale in the central interval 1502, and sets the array score included in the time period 1403 to "1" since the player does not exhale in the central interval 1522. As a result, the scoring unit 205 determines that the player has a correct breathing in all scoring time period 1430. In this fashion, determination may be carried out for major portions of the scoring time period without strictly carrying out scoring for each element of the array score included in all time periods 1401, 1402, and 1403. This simplifies the scoring process. Note that a central interval can be freely set. Moreover, a weighting may be set in a scoring time period, and an interval greatly contributing the whole score and an interval not like so may be separated.

The present invention is not limited to the foregoing embodiments, and can be change and modified in various forms. Moreover, individual configuration elements explained in the foregoing embodiments can be freely combined together. In each of the foregoing embodiments, the game device 200 gives scores a breathing timing when the player has a pause of yoga, but the present invention can be applied as a breathing scoring method in other kinds of games.

A program which causes the whole units or a part of the game device 200 to operate may be stored in a computer-readable recording medium, such as a memory card, a CD-ROM, a DVD, or an MO (Magneto Optical disk) for distribution, and installed in a computer to cause such a computer to function as the foregoing units or to execute the foregoing steps.

Furthermore, such a program may be stored in a disk device or the like of a server device over the Internet, and for example, superimposed on a carrier wave, and downloaded by a computer.

The present application claims the priority based on Japanese Patent Application No. 2007-081465, the contents of which are incorporated herein by reference in its entirety.

### Industrial Applicability

As explained above, according to the present invention, it is possible to provide a game device, a game processing method, an information recording medium and a program which are suitable for guiding a player to take desired motion and breathing.

## Claims

1. A game device comprising:
a storage unit (201) which stores a position, a posture and an orientation of a character object in a virtual space in association with an elapsed time, and stores a time period in which a player should exhale;
a display unit (202) which displays the character object based on the position, the posture and the orientation of the character object stored in the storage unit (201) in association with a current elapsed time, and displays information indicating whether or not a current time is within the time period stored in the storage unit (201), in which the player should exhale a breath;
a detecting unit (203) which detects a sound production by the player;
a deriving unit (204) which derives, based on the detected sound production, a time period in which the player is exhaling a breath;
a scoring unit (205) which gives scores breathing of the player based on a degree of agreement between the stored time period in which the player should exhale the and the derived time period in which the player is exhaling; and
an output unit (206) which outputs a result of scoring by the scoring unit (205).

2. The game device according to claim 1, wherein
the storage unit (201) further stores a position of a detecting object representing the detecting unit (203),
the display unit (202) displays the detecting object together with the character object, and
the scoring unit (205) executes scoring when a distance between a mouth of the character object and the detecting object is less than a predetermined threshold.

3. The game device according to claim 2, further comprising:
an input receiving unit (1201) which receives an input to move a position of the detecting object from the player; and
an updating unit (1202) which updates a position of the detecting object stored in the storage unit (201) based on the received input.

4. The game device according to claim 3, wherein
the storage unit (201) further stores a position of a view point and a viewing direction from and in which the character object is viewed in the virtual space,
the input receiving unit (1201) further receives an input of instruction to move the position of the view point and the viewing direction,
the updating unit (1202) updates the position of the view point and the viewing direction stored in the storage unit (201) based on the input to move the position of the view point and the viewing direction, and
the display unit (202) generates and displays an image in which the character object is viewed from the position of the view point in the viewing direction based on the position, the posture and the orientation of the character object stored in the storage unit (201) in association with a current elapsed time and the position of the view point and the viewing direction stored in the storage unit (201).

5. The game device according to claim 4, wherein the display unit (202) further generates and displays an image of a view of the virtual space as seen from the character object.

6. The game device according to claim 1, wherein the display unit (202) displays the character object with a predetermined first color when a current time is within a time period in which the player should exhale, and displays the character object with a predetermined second color other than the first color when a current time is not within that time period.

7. The game device according to claim 6, wherein
the storage unit (201) further stores a strength of breathing by which the player should exhale in association with a time period in which the player should exhale, and
the display unit (202) displays the character object while changing a shading of the first color based on the stored strength of breathing.

8. A game processing method executed by a game device (200) having a storage unit (201), the storage unit (201) storing a position, a posture and an orientation of a character object in a virtual space in association with an elapsed time and storing a time period in which a player should exhale, the method comprising:
a display step of displaying the character object based on the position, the posture and the orientation of the character object stored in the storage unit (201) in association with a current elapsed time, and of displaying information indicating whether or not a current time is within a time period stored in the storage unit (201), in which the player should exhale;
a detecting step of detecting a sound production by the player;
an deriving step of deriving a time period in which the player is exhaling, from the detected sound production;
a scoring step of scoring breathing of the player based on a degree of agreement between the stored time period in which the player should exhale the and the derived time period in which the player is exhaling; and
an output step of outputting a result of scoring obtained through the scoring step.

9. A computer-readable recording medium storing a program which allows a computer to function as:
a storage unit (201) which stores a position, a posture and an orientation of a character object in a virtual space in association with an elapsed time, and stores a time period in which a player should exhale;
a display unit (202) which displays the character object based on the position, the posture and the orientation of the character object stored in the storage unit (201) in association with a current elapsed time, and displays information indicating whether or not a current time is within a time period stored in the storage unit (201), in which the player should exhale;
a detecting unit (203) which detects a sound production by the player;
a deriving unit (204) which derives a time period in which the player is exhaling from a detected sound production;
a scoring unit (205) which gives scores breathing of the player based on a degree of agreement between the stored time period in which the player should exhale and the derived time period in which the player is exhaling; and
an output unit (206) which outputs a result of scoring by the scoring unit (205).

10. A program allowing a computer to function as:
a storage unit (201) which stores a position, a posture and an orientation of a character object in a virtual space in association with an elapsed time, and stores a time period in which a player should exhale;
a display unit (202) which displays the character object based on the position, the posture and the orientation of the character object stored in the storage unit (201) in association with a current elapsed time, and displays information indicating whether or not a current time is within the time period stored in the storage unit (201), in which the player should exhale;
a detecting unit (203) which detects a sound production by the player;
an deriving unit (204) which derives, based on the detected sound production, a time period in which the player is exhaling;
a scoring unit (205) which gives scores breathing of the player based on a degree of agreement between the stored and the derived time periods; and
an output unit (206) which outputs a result of scoring by the scoring unit (205).
